# EUROPÄISCHE PATENTSCHRIFT

(11) **EP 0 597 237 B1**
(45) Veröffentlichungstag und Bekanntmachung des Hinweises auf die Patenterteilung: **13.03.1996**
(21) Anmeldenummer: 93115949.5
(22) Anmeldetag: 02.10.1993
(51) Int. Cl.: B01D 39/20, B01D 46/24, F02B 77/00

(54) **Verfahren zum stirnseitigen, wechselweisen Verschliessen von Kanälen eines Wabenkörper-Monolithen für Abgasreinigungsanlagen von Verbrennungsmotoren**
Process for computer controlled frontal alternating closure of channels of a honeycomb body monolith for exhaust gas purifiers of combustion engines
Procédé de fermeture frontale alternée des canaux d'un corps monolithique en nid d'abeilles pour dispositifs d'épuration des gaz d'échappement de moteurs à combustion interne

(30) Priorität: 12.11.1992 DE 4238120
(43) Veröffentlichungstag der Anmeldung: 18.05.1994
(73) Patentinhaber: Schott Glaswerke, D-55122 Mainz (DE); Carl-Zeiss-Stiftung trading as SCHOTT GLASWERKE, D-55122 Mainz (DE)
(72) Erfinder: Noky, Werner, D-55122 Mainz (DE)

(56) Entgegenhaltungen:
- EP-A- 0 070 202
- EP-A- 0 564 967
- EP-B- 0 042 302
- US-A- 4 411 856
- US-A- 4 557 773

## Beschreibung

Die Erfindung betrifft ein Verfahren zum rechnergesteuerten, stirnseitigen, wechselweisen Verschließen von im Ausgangszustand durchgehenden Kanälen eines keramisierbaren Wabenkörper-Monolithen für Abgasreinigungsanlagen von Verbrennungsmotoren, wobei die später im Betrieb freien Öffnungen, die das anströmende ungereinigte Gas bzw. das abströmende gereinigte Gas der Kanäle führen, mit Hilfe von Dosierköpfen einer Dosiereinrichtung
- zunächst temporär mit einer ersten, erhärtbaren, viskosen Masse verschlossen werden, nach deren Erhärtung,
- die danach noch freien Kanalöffnungen mit einer zweiten permanent-wirkenden, ebenfalls erhärtbaren, viskosen Masse verschlossen werden, und daß
- anschließend die erste Masse im Verlauf der Härtung der zweiten Masse entfernt wird.

Derartige Abgasreinigungsanlagen finden beispielsweise als Rußfilter zunehmend Einsatz in Personenkraftwagen, in Lastkraftwagen und besonders in Stadt-Bussen, die mit einem Dieselmotor angetrieben werden.
Aber auch bei stationären Anlagen, wie z.B. Notstromaggregaten, wird die Abgasreinigung zunehmend bedeutsamer.

Die Wirkung eines derartigen Filters beruht darauf, daß die Kanäle des wabenförmigen Monolithen wechselseitig an beiden Seiten derartig verschlossen werden, daß das Abgas gezwungen wird, durch die porösen Wände zwischen den Kanälen hindurchzuströmen.
Dabei dienen die Wände als Filter für den in feinen Partikeln auftretenden Ruß.
Die Kanäle setzen sich jedoch nach einiger Zeit mit Ruß und anderen Ablagerungsprodukten zu.
Ein solcher Filter muß daher immer wieder regeneriert werden, d.h. auf Temperaturen erhitzt werden, bei denen die zurückgehaltenen Partikel oxidiert werden können.
Die Rohlinge für die Wabenkörper bestehen häufig aus Cordierit oder auch aus Sinterglaskeramik, die meist durch ein Extrudierverfahren mit anschließender Trocknung und Sinterung hergestellt werden. Durch das Trocknen und durch das Sintern schrumpft der Körper und dies oft unter Verformung. Diese ungleichmäßige Schwindung hat eine nicht kalkulierbare Abweichung der Ist-Geometrie von der Soll-Geometrie eines idealisierten Wabenkörpers zur Folge.
Zusätzlich kann auch schon der Extrudiervorgang zu einer Verformung der Wabenstruktur führen.

Diese Abweichungen bringen nun erhebliche Probleme bei der weiteren Verarbeitung des Wabenkörpers-Monolithen, z.B. wenn die Kanäle auf beiden Stirnseiten wechselseitig maschinell verschlossen werden müssen.

Ein Standard-Monolith hat einen Durchmesser von etwa 14,4 cm. Das Wabenrohmaß beträgt ca. 3,6 x 3,6 mm, so daß ca. 1.400 Wabenkanäle pro Stirnseite mit einem Lochquerschnitt von jeweils 2,4 x 2,4 mm vorhanden sind.
Auf jeder Stirnseite müssen daher wechselseitig etwa 700 Wabenöffnungen und damit Filterkanäle verschlossen werden.
Aufgrund der Abweichungen von der Soll-Geometrie des Monolithen ist es nicht möglich, die 700 Öffnungen pro Stirnseite mit einem Düsenkopf mit 700 Düsen auf einmal in einem Arbeitsgang zu verschließen.

Auch das manuelle Verschließen der Kanäle ist keinesfalls vertretbar im Hinblick auf die dabei entstehenden hohen Personalkosten.

Im Stand der Technik sind bereits Vorrichtungen und Verfahren zum wechselseitigen Verschließen der Wabenkanäle eines Wabenkörper-Monolithen vorgeschlagen worden.

Beispielhaft wird auf die US-PS 4 411 856 verwiesen. Darin wird vorgeschlagen, eine eine Stirnseite des Monolithen vollständig bedeckende Maske zu verwenden, die mit Durchgängen und mit zapfenförmigen Ansätzen auf der den Monolithen zugewandten Seite versehen ist. Die Zapfen werden in die nicht zu verschließenden Kanäle gesetzt, wo hingegen die Masse durch die Durchgänge in der Maske in die Endbereiche der zu verschließenden Kanäle eingebracht wird.
Der bereits erwähnten Abweichung des Monolithen von einer Soll-Geometrie wird dabei dadurch versucht Rechnung zu tragen, daß die verwendete Maske aus einem elastischen Material besteht.

In Grenzen mag diese Methode anwendbar sein. Problematisch allerdings ist, daß der Abstand der erwähnten Zapfen zu den Durchgängen festgelegt ist, so daß der durch die Elastizität der Maske erzielte Ausgleich der Abweichungen des Monolithen von der Soll-Geometrie auf sehr geringe Werte beschränkt bleibt.

Aus der EP 0 042 302 B1 ist ein Verfahren zur Herstellung eines keramischen Wabenfilters aus einem porösen, keramischen Wabenkörper mit einer Vielzahl von Kanälen bekannt, die sich durch denselben hindurch von einem Stirnflächenende zum anderen Stirnflächenende erstrecken, wobei an jedem Stirnflächenende des Wabenkörpers ein gelochter Film angeordnet wird, dessen Lochungen mit bestimmte Kanälen an den Stirnflächenenden korrespondierenden, und wobei durch diese Lochungen im Film ein Dichtungsmaterial in die Kanäle eingebracht wird, um die Endbereiche dieser bestimmten Kanäle abzudichten, und wobei bestimmte Kanäle, die an dem einen Stirnflächenende nicht abgedichtet worden sind, an dem anderen Stirnflächenende abgedichtet werden.

Als Modifikation dieses Verfahrens ist dort beschrieben, daß die Lochungen des Films solchen Kanälen entsprechen, die nicht abgedichtet werden sollen, daß ein wärmeflüchtiges Material in die Kanäle eingefüllt wird, das sich beim Brennen oder Sintern der Wabe verflüchtigt, daß die Filme entfernt werden, und daß die verbleibende Kanäle, die nicht mit dem wärmeflüchtigen Material gefüllt sind, mit einem Dichtungsmaterial abgedichtet werden.

Sehr aufwendig ist es dabei auch hier, einen gelochten Film herzustellen, dessen Lochungen mit den Kanälen an den Stirnflächenenden korrespondieren müssen.
Der Film muß wahrscheinlich für jeden Wabenkörper, sogar für jede Stirnfläche eines einzigen Wabenkörpers anders gelocht werden, was eine preisgünstige, rationelle Fertigungsweise ausschließt.

Durch die Lehre des US-PS 4,329,162 ist eine Vorgehensweise bekannt, bei der Dosierköpfe einer Dosiereinrichtung verwendet werden, mit Düsen, die in die zu verschließenden Kanäle abgesenkt werden und Verschlußmasse in dessen Endbereich einbringen.

Wie das in rationeller Weise, mit vertretbarem Aufwand geschehen soll ist aber nicht ersichtlich.

Aus der US-PS 4,557,773 ist ein Rechner entnehmbar, der ein von einem Bildaufnehmer von der Stirnseite des Monolithen abgestatetes Bild in einem Speicher ablegt und verarbeitet und entsprechend einem festgelegten Arbeitsplan Werkzeuge in Kanäle der abgetasteten Stirnseite absenkt.

Auch nach der US-PS 4,557,773 müssen die Sirnflächen sehr arbeitsintenisv mit einer Folie belegt werden.

In der DE 42 11 787.9 der Anmelderin wird ein Verfahren zur Herstellung eines Filters in Form eines keramischen Wabenkörper-Monolithen mit einer Vielzahl durchgehender Kanäle, die an den Stirnseiten des Monolithen wechselseitig mit einem Stöpsel verschlossen sind, ausgehend von einem Rohling des Wabenkörper-Monolithen aus keramisierbarem Material mit beidseitig offenen Kanälen beschrieben, bei dem Zonen von Kanälen auf beiden Stirnseiten ermittelt werden, die in vorgebbaren Toleranzen der Soll-Geometrie eines idealisierten Wabenkörper-Monolithen entsprechen mit der Maßgabe, daß die Zonen eine möglichst hohe Anzahl von Kanälen beinhalten, Dosierköpfe einer Dosiervorrichtung mit unterschiedlichen Anzahlen von Düsen, die in die zu verschließenden Kanäle abgesenkt werden und die zähflüssige Stöpselmasse in deren Endbereich einbringen so motorisch verfahren und angesteuert werden, daß entsprechend der genannten Ermittlung der Zonen von Kanälen der Dosierkopf mit der höchsten Anzahl von Düsen am häufigsten zum Einsatz kommt und danach der Dosierkopf mit der nächst niedrigeren Anzahl von Düsen verwendet wird, so lange, bis alle vorgesehenen Kanäle verschlossen sind und der so vorbereitete Wabenkörper-Monolith anschließend einem Keramisierungsprozeß unterworfen wird.

Bei diesem Verfahren wird die Verschließmasse in die Wabenkanäle direkt mittels der Einfach- oder Mehrfachdüsenköpfe eingebracht, nachdem die Waben-Geometrie erfaßt wurde.
Die verwendeten Düsen müssen dabei in etwa dem Durchmesser der Wabenkanäle entsprechen, um den Kanal vollständig zu füllen, was die Positionierung aber erheblich erschwert.

Des weiteren muß die Dosiereinrichtung den rheologischen, chemischen und physikalischen Eigenschaften der jeweiligen und rheologischen oft unterschiedlichen Verschließmassen genau angepaßt sein.

Alle Anlagenbestandteile müssen zur Vermeidung von Korrosions- und Zersetzungsvorgängen in Folge der chemischen Aggressivität der Verschließmasse aus teueren, korosionsfesten Materialien zusammengestellt werden.

Darüber hinaus müssen die Materialien auch noch beständig gegen Abrasion sein, da die Verschließmasse oft relativ grobkörnige und zum Teil sehr harte und splittrige Bestandteile enthält.

Bei jedem Wechsel der Verschlußmasse oder bei Stillstand der Anlage ist es notwendig, die gesamte Anlage aufwendig zu reinigen. Das bedeutet, die Anlage muß zuerst vollkommen leergefahren werden, was zusätzlichen Materialverlust und Abfall mit sich bringt. Anschließend muß die gesamte Anlage im günstigsten Fall durch mehrere Zwischenspülungen ausgewaschen, oder bei ausgehärteten Resten sogar zerlegt und manuell gereinigt werden.

Um die Homogenität der Masse zu erhalten, ist weiterhin ständiges Rühren, Mischen und Umpumpen notwendig, um ein Absetzen in den Rohrleitungen und Entmischungsvorgänge innerhalb der Masse zu vermeiden.

Es ist daher Aufgabe der vorliegenden Erfindung, ein rechnergesteuertes und automatisiertes Verfahren zur Herstellung eines Filters in Form eines keramischen Wabenkörper-Monolithen zu schaffen, bei dem ausgehend von einem Rohling des Monolithen die Kanäle an den Stirnseiten wechselseitig mittels einer Dosieranlage im großtechnischen Maßstab problemlos und rationell mit einer keramisierbaren Masse verschlossen werden können.
Des weiteren ist es Aufgabe der Erfindung, den Verschließvorgang technisch weiter zu entwickeln und wesentlich zu vereinfachen, so daß
a) keine Masken, Schablonen, Folien, Filme o. ä. Hilfsmittel mehr notwendig sind,
b) wesentlich kleinere Düsenquerschnitte einsetzbar sind, und
c) die Dosiereinrichtung mit Dosieranlage, den Zuleitungen, den Dosierköpfen und Düsen mit einer (!) problemlos zu verarbeitenden Masse, ohne Abrasion, ohne chemische Aggressivität und ohne Absetzneigung betrieben werden kann und
d) die keramisierbare Masse über eine andere robuster gebaute Dosieranlage eingebracht wird.

Diese Aufgabe wird durch ein Verfahren gelöst, bei dem
- zunächst die erste Stirnseite (19) von einem Bildaufnehmer (10) abgetastet und das abgetastete Bild in einem Speicher eines Rechners abgelegt und verarbeitet wird,
- der Rechner das Bild nach zusammenhängenden Zonen (2,3,4,5) von Kanälen (6) absucht, die mit vorgebbaren Toleranzen der Sollgeometrie einer entsprechenden Zone eines idealisierten Wabenkörper-Monolithen entsprechen, mit der Maßgabe, daß die Zonen eine möglichst hohe Anzahl von Kanälen (6) beinhalten,
- der Abarbeitungsplan der durch den Rechner angesteuerten Dosierköpfe (17,18) einer Dosiervorrichtung festgelegt wird,
- entsprechend des festgelegten Abarbeitungsplanes die Düsen (22,23) der jeweiligen Dosierköpfe (17,18) in die zu verschließenden Kanäle abgesenkt werden und eine erste ausbrennbare und/oder ausschmelzbare Verschluß-Masse in die Endbereiche der Kanäle eingebracht wird, wobei die Dosierköpfe (17,18) so motorisch verfahren und angesteuert werden, daß entsprechend der genannten Ermittlung der Zonen von Kanälen (6) der Dosierkopf mit der höchsten Anzahl von Düsen (22,23) am häufigsten zum Einsatz kommt und danach der Dosierkopf mit der nächsten niedrigeren Anzahl von Düsen verwendet wird, solange, bis alle vorgesehenen Kanäle (6) verschlossen sind,
- hiernach die Düsen (22,23) aus diesen herausbewegt werden,
- der Monolith (1) nach Verschließen der Kanäle (6) auf der ersten Stirnseite (19) um 180°C gedreht wird und in entsprechender Weise
- die Kanäle (6) auf der anderen Stirnseite (20) in einem zu jenem auf der ersten Stirnseite (19) komplementäre Muster verschlossen werden,
- nach Aushärten der ersten Verschluß-Masse in den Endbereichen der Kanäle (6), anschließend eine zweite, von der ersten unterschiedliche, keramisierbare und/oder sinterbare Masse zum Verschließen der dann noch offenen Kanäle eingesetzt wird, wobei alle noch offenen Kanäle der Stirnseiten (19,20) mit einem die gesamte Filterfläche überdeckenden Dosierzylinder (28) in einem einzigen Arbeitsgang in ihren Endbereichen verschlossen werden, und
- daß der so vorbereitete Wabenkörper-Monolith (1) anschließend einem Aufheiz- und Keramisierungsprozeß unterworfen wird, wobei die erste Verschluß-Masse ausbrennt und/oder ausschmilzt.

Nach der Erfindung wird bevorzugt als erste Masse eine überwiegend organische Masse bei einer Viskosität η von 10*⁵* dPa·s bis 10⁶ dPa·s, insbesondere von 10^{5,5} dPa·s bis 10^{5,8} dPa·s in die Kanalöffnungen eingebracht.

Dabei wird als erste Masse eine im Vergleich zur zweiten Masse bei niedrigen Temperaturen ausbrennbare und/oder ausschmelzbare organische Masse eingesetzt.

Als besonders bevorzugt nach der Erfindung und einfach in der Anwendug haben sich dabei thermoplastische Massen erwiesen, deren Viskosität bei der Verarbeitung jederzeit leicht eingestellt werden kann und die im Kontakt mit dem Monolithen rasch und dauerhaft erhärten.

Als erste "Masse", die über die Düsen, die dann nur noch einen Durchmesser von 1 mm und kleiner aufweisen müssen, in die Kanäle eingebracht wird, sind hier in erster Linie auch zu verstehen, z.B. wachsartige Verbindungen, wie Paraffin, Stearin, Massen auf Silikonbasis, oder auf Kunstharzbasis, oder auf Basis eines Heißklebers.

Statt der aufwendigen Dosiereinrichtung für eine inhomogene, aus z.T. vielen Komponenten bestehende keramische Verschließmasse wird nach der Erfindung eine einfache Dosiereinrichtung für eine ausbrennbare, und/oder ausschmelzbare, leicht zu handhabende homogene Füllmasse eingesetzt.
Wie gesagt, kann bevorzugt flüssiges Wachs verwendet werden, das bei der Berührung mit dem kalten Monolithen rasch erstarrt.

Nach der Erfindung kann die zweite Masse über einen die gesamte Filterfläche überdeckende Dosierzylinder in einem einzigen Arbeitsgang in alle nicht von der ersten Masse verschlossenen Kanäle eingepreßt, oder mittels eines sog. Rakels eingebracht werden.

Als die zweite Masse wird hier eine hochtemperaturbeständige keramisierbare, und/oder sinterbare, überwiegend anorganische Masse eingesetzt.
Der Umgang mit dieser möglicherweise korrosiven und abrasiven Masse ist bei Einsatz eines großflächigen Dosierzylinders oder Rakels sehr viel weniger problematisch, als beim Einsatz von Düsen mit Querschnitten im Millimeterbereich.
Die gesamte Aufbereitungstechnik der Masse und die Möglichkeiten der Dosierung sind bei Einsatz großer Dosierzylinder oder Anwendung der Rakeltechnik erheblich vereinfacht.

So können hier nach der Erfindung z.B. wesentlich dickflüssigere, pastöse Massen eingesetzt werden, die dann keinerlei Neigung zur Entmischung zeigen.

Bevorzugt werden Massen mit Viskositäten η von 10⁴ dPa·s bis 10⁵ dPa·s eingebracht.

Die Massen sind in ihrer Zusammensetzung üblicherweise auf den Chemismus des Monolithen abgestimmt, und in ihrem Schwindungsverhalten so eingestellt, daß Sie jederzeit, auch nach der Keramisierung, die Kanäle des Wabenkörper-Monolithen dicht und fest verschließen.

Der Dosiervorgang beispielsweise mit Wachs wird neben der Vermeidung der bereits erwähnten Nachteile der Dosierung einer keramischen Füllmasse noch dadurch erheblich erleichtert, daß mit kleineren Düsen, z.B. mit Düsendurchmessern von 1 mm und kleiner gearbeitet werden kann.

Nach der Erfindung werden dabei
Zonen (2,3,4,5) von Kanälen (6) auf beiden Stirnseiten (19,20) ermittelt, die in vorgebbaren Toleranzen der Sollgeometrie eines idealisierten Wabenkörper-Monolithen entsprechen, mit der Maßgabe, daß die Zonen eine möglichst hohe Anzahl von Kanälen (6) beinhalten, Dosierköpfe (17,18) einer Dosiervorrichtung mit unterschiedlichen Anzahlen von Düsen, die in die zu verschließenden Kanäle (6) abgesenkt werden und eine erste ausbrennbare und/oder ausschmelzbare Verschluß-Masse in deren Endbereich einbringen, so motorisch verfahren und angesteuert, daß entsprechend der genannten Ermittlung der Zonen von Kanälen (6) der Dosierkopf (2) mit der höchsten Anzahl von Düsen (22,23) am häufigsten zum Einsatz kommt und danach der Dosierkopf (3) mit der nächsten niedrigeren Anzahl von Düsen verwendet wird, solange, bis alle vorgesehenen Kanäle (6) verschlossen sind, nach Aushärten der ersten Verschluß-Masse in den Endbereichen der Kanäle (6), anschließend eine zweite, von der ersten unterschiedliche, keramisierbare und/oder sinterbare Masse zum Verschließen der dann noch offenen Kanäle eingesetzt wird und daß der so vorbereitete Wabenkörper-Monolith (1) anschließend einem Aufheiz- und Keramisierungsprozeß unterworfen wird, wobei die erste Verschluß-Masse ausbrennt und/oder ausschmilzt.

Dabei wird zunächst die erste Stirnseite von einem Bildaufnehmer beispielsweise einer Fernsehkamera abgetastet und das abgetastete Bild in einem Speicher eines Rechners abgelegt und verarbeitet. Der Rechner sucht das Bild nach zusammenhängenden Zonen von Kanälen ab, die in vorgebbaren Toleranzen der Soll-Geometrie entsprechender Zonen eines idealisierten Wabenkörper-Monolithen entsprechen.

Dieses Aufsuchen von zusammenhängenden Zonen erfolgt programmgesteuert. Sodann wird der Abarbeitungsplan der durch den Rechner angesteuerten Dosierköpfe festgelegt. Dies geschieht in Übereinstimmung mit der Erfindung nach der Maßgabe, daß möglichst der Dosierkopf mit den meisten Düsen am häufigsten zum Einsatz kommt. Hierdurch wird die Zeit für das Verschließen der Kanäle optimiert, d.h. minimiert, indem möglichst viele Kanäle immer gleichzeitg verschlossen werden.
In den Restzonen beispielsweise an den Rändern des Monolithen werden Zonen mit nur noch wenigen zu verschließenden Kanälen übrigbleiben, für die dann ein Dosierkopf mit weniger, beispielsweise zwei oder vier Düsen zum Einsatz kommt.

Entsprechend des festgelegten Abarbeitungsplanes werden die Düsen der jeweiligen Dosierköpfe in die zu verschließenden Kanäle abgesenkt und die Masse wird in die Endbereiche der Kanäle eingebracht, worauf die Düsen wieder aus den Kanälen herausbewegt werden.

Nachdem die eine Stirnseite des Monolithen so behandelt worden ist und entsprechend alle vorgesehenen Kanäle mit der Masse verschlossen worden sind, wird der Monolith um 180° gedreht.
Die Kanäle werden auf der anderen Stirnseite in genau entsprechender Weise verschlossen, allerdings in einem komplementären Muster zu jenem auf der ersten Stirnseite.
Erst hierdurch wird der Monolith zum Filter.

Vorteilhaft bilden die Umrisse der ermittelten Zone von Kanälen ein Rechteck. Diese Verfahrensweise korrespondiert mit einer gegenständlichen Ausbildung der Dosierköpfe, bei denen die Düsen in einer rechteckigen Matrix angeordnet sind.

Nach dem nun wechselseitigen Verschließen der Kanäle mit Wachs oder einer ähnlichen Masse folgt dann das gemeinsame Verschließen aller übrigen Kanäle mit einer Keramikfüllmasse, nach der Erfindung in einem einzigen Arbeitsgang über einen die gesamte Filterfläche überdeckenden Dosierzylinder, oder Rakel.

Danach erfolgt ein rückstandsfreies Ausbrennen oder Ausschmelzen der ersten Masse, z.B. einer Wachsmasse, wie Paraffin oder Stearin.
Dies kann entweder in einem getrennten Tempervorgang oder beim nachfolgenden Sintern des Monolithen während des Keramisierungsvorganges erfolgen.

Eine Vorrichtung zur Durchführung des Verfahrens ist in P 42 11 787.9 ausführlich beschrieben.
Die Vorrichtung muß hier lediglich um einen Dosierzylinder, der in der Lage ist, die gesamte Filterfläche zu überdecken, ergänzt werden.

Die Erfindung wird anhand der Figuren näher erleutert:
Es zeigen:
- Figur 1:: eine schematische Aufsicht auf eine Stirnseite eines Wabenkörper-Monolithen mit schematisch dargestellten Zonen von Kanälen unterschiedlicher Größe,
- Figur 2:: eine Prinzipdarstellung der erfindungsgemäßen Vorrichtung.

Der Wabenkörper-Monolith 1 weist eine Vielzahl von Kanälen 6 auf, die voneinander durch die Kanalwände 7 getrennt sind. Diese Kanalwände 7 sind porös und üben nach den wechselseitigen Verschluß der Kanäle 6 auf beiden Stirnseiten des Monolithen 1 die eigentliche Filterfunktion aus, indem Partikel von den Wänden 7 zurückgehalten werden, wohingegen die Abgase durch die Wände hindurch in die benachbarten Kanäle treten können, die auf der anderen Stirnseite unverschlossen sind und aus denen daher die Abgase austreten können. Die Außenwandung 8 des Monolithen ist gasundurchlässig.

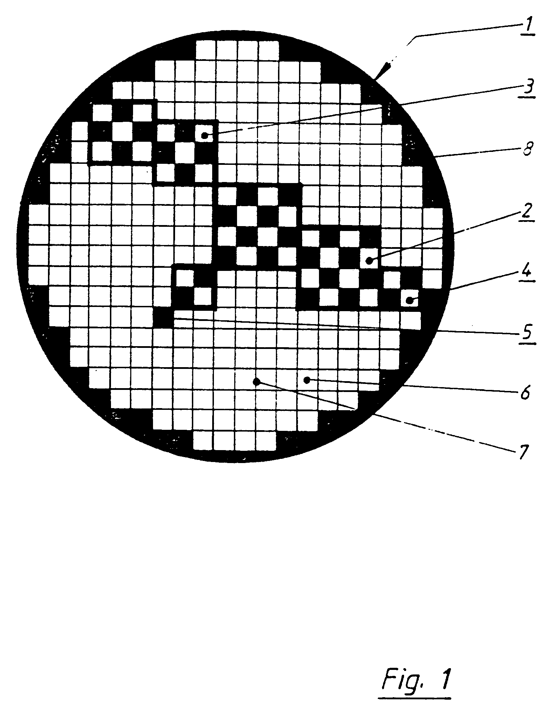

Die Geometrie des in Figur 1 dargestellten Monolithen ist idealisiert. In der Realität treten nicht unerhebliche Abweichungen von dieser Soll-Geometrie in Folge unterschiedlicher Schrumpfung beim Trocknen und Sintern des Monolithen, sowie infolge einer möglichen Deformation der Wabenstruktur beim Extrudieren auf.

In Figur 1 sind schematisiert dargestellt Zonen 2,3,4 und 5, welche Zonen von Kanälen 6 repräsentieren sollen, die in vorgebbaren Toleranzen der Soll-Geometrie einen idealisierten Wabenkörper-Monolithen entsprechen.
Die Zonen sind im dargestellten Ausführungsbeispiel quadratisch ausgebildet. Die hell belassenen Felder innerhalb der Zonen weisen auf diejenigen Kanäle hin, die bei der Durchführung des Verfahrens zunächst offen gelassen werden, wohingegen die geschwärzten Stellen auf denjenigen Kanälen 6 liegen, welche zuerst zu verschließen sind. Die geschwärzten Stellen sind dann ebenfalls die Positionen, an denen ein zugeordneter Dosierkopf, der Düsen aufweist, mittels der die erste Masse in die betreffenden Kanäle eingespritzt wird, zum Einsatz kommt.
So übergreift nach Figur 1 die Zone 2 insgesamt 16 Kanäle, von denen zunächst 8 verschlossen werden sollen. Das entsprechende Verhältnis in der Zone 3 beträgt 9 zu 4, bei der Zone 4 dann 4 zu 2. Die Zone 5 repräsentiert lediglich einen einzelnen Kanal 6. In diesem Fall muß der betreffende Kanal durch einen Dosierkopf mit nur einer Düse verschlossen werden, da die geometrischen Abweichungen so groß sind, daß kein anderer Dosierkopf mit mehreren Düsen mehr verwendet werden kann.

Gemäß dem erfindungsgemäßen Verfahren wird nun eine Stirnseite des Monolithen 1 abgetastet und die Bildinformation in einen Speicher eines Rechners abgelegt und bearbeitet.

Sodann werden programmgesteuert die Zentren der Kanäle ermittelt. Die Software des Rechners legt nun die Raster der Zonen 2 bis 5 über die abgespeicherte Bildinformation, wobei im Sinne einer Optimierung versucht wird, die größte Zone 2 möglichst häufig anzuwenden. Gelingt dies nicht mehr, werden kleinere Zonen über die Bildinformation im Speicher des Rechners gelegt, solange, bis schließlich alle Kanäle in Zonenbereiche eingeteilt sind. Hieraus kalkuliert der Rechner sodann eine Abarbeitungswahl, die festlegt, an welche Dosierköpfe in welcher Reihenfolge der Monolith 1 angefahren werden soll. Beginnend mit der größten Zone 2 wird der Monolith 1 also beispielsweise zunächst an den Dosierkopf mit der größten Anzahl von Düsen, die im selben Muster wie die Zone 2 angeordnet sind, herangeführt. In dem Fall, daß noch mehrere Zonen diese Größe ermittelt worden sind, wird der Monolith entsprechend verfahren und nochmals oder mehrmals an verschiedenen Stellen an den größten Dosierkopf herangebracht. Danach werden beispielsweise die nächst kleineren ermittelten Zonen des Monolithen an den nächst kleineren Dosierkopf herangefahren, bis schließlich alle Kanäle übrigbleiben, die eine gesonderte Behandlung durch einen Dosierkopf mit nur einer Düse erforderlich machen.

Nach der Durchführung dieses Verfahrens sind die Kanäle 6 des Monolithen 1 auf einer seiner Stirnflächen verschlossen. Der Monolith wird dann um 180° gedreht und entsprechend verfahren, wobei allerdings ein komplimentäres Verschlußmuster für die Kanäle eingehalten werden muß.
Nach dem gezielten Verschließen der Kanäle 6 auf beiden Stirnseiten des Monolithen 1 wird dieser unter einen Dosierzylinder 28 gebracht, der mit einer keramischen Masse gefüllt ist und dessen Durchmesser etwa der gesamten Filterfläche entspricht. Der Dosierzylinder 28 ist über die Leitung 29 mit einer Dosieranlage 30 verbunden und wird ebenfalls rechnergesteuert mit der in der Dosieranlage 30 befindlichen keramischen Masse gespeißt. Über diesen Zylinder wird eine bestimmte Menge der keramischen Masse in die nun noch nicht von der ersten Masse verschlossenen Kanälchen bis zu einer gewissen gewünschten Tiefe eingepreßt.
Anschließend wird der Monolith nochmals um 180° gedreht und auch auf seiner gegenüberliegenden Stirnfläche mit Hilfe des die gesamten Filterfläche überdeckenden Dosierzylinders 28 alle Kanäle gefüllt.

Nach dem so gezielten Verschließen der Kanäle 6 mit einer ersten Masse auf beiden Stirnseiten des Monolithen und anschließendem Verschließen aller dann noch freigebliebenen Kanäle mit der zweiten keramischen Masse wird der Monolith einem Temperaturprozeß unterworfen. Bei Temperaturen weit unterhalb der Keramisierungstemperatur wird die organische erste Masse ausbrennen oder ausschmelzen und damit wieder freie Kanäle hinterlassen, während bei weiterer Temperaturbelastung bis zur Keramisierungstemperatur die zweite Masse zusammen mit dem Monolithen keramisiert.
Am Ende dieses Verfahrens steht dann der fertige Filter. Das vorgeschlagene Verfahren führt zu einem technisch wesentlich vereinfachten Verschließvorgang der Kanäle eines Wabenkörpers-Monolithen.

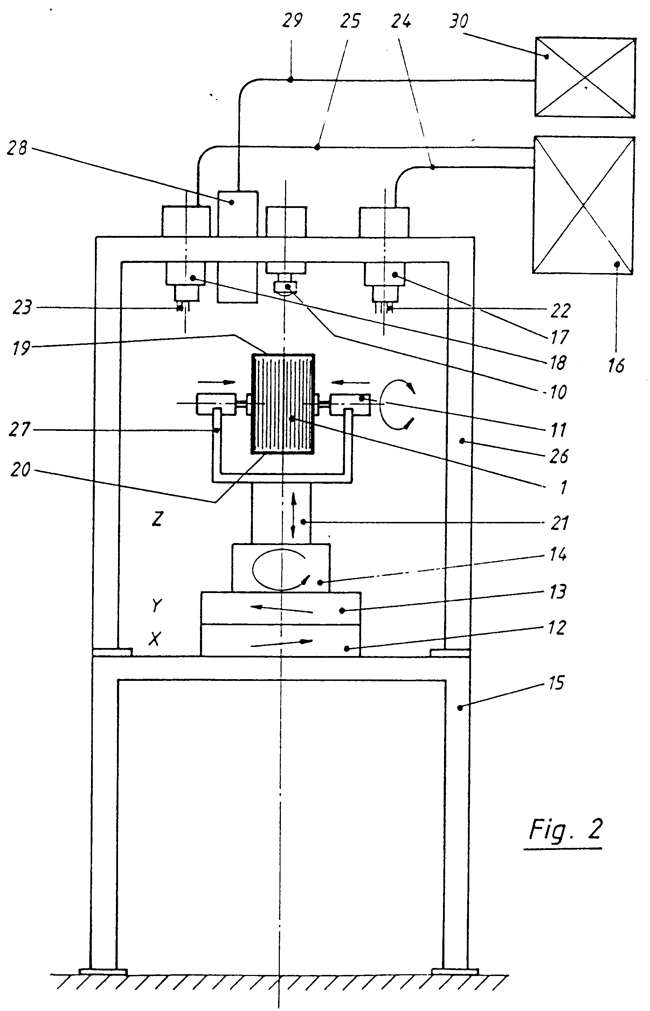

Eine Vorrichtung zur Durchführung des Verfahrens ist schematisiert in Figur 2 dargestellt.

Ein Grundrahmen 15 trägt eine motorisch verfahrbare Schlitteneinrichtung 12,13,21, zwischen denen noch eine Drehvorrichtung 14 geschaltet ist. Die Schlitteneinrichtung gestattet das Verfahren in allen drei Raumachsen eines von ihr getragenen Bügels 27, an der eine Spann- und Wendeeinrichtung 11 angebracht ist. Diese Spann- und Wendeeinrichtung 11 spannt zwischen ihren Backen einen Wabenkörper-Monolithen 1 ein, dessen beiden Stirnseiten 19 und 20 in der bereits beschriebenen Weise bearbeitet werden sollen.
Die Schlitteneinrichtung 12,13 und 21, sowie die Drehvorrichtung 14 und die Spann- und Wendeeinrichtung 11 werden von einem nicht dargestellten Rechner angesteuert, in Übereinstimmung mit der vom Rechner festgelegten Abarbeitungsbahn. Das Grundgestellt 15 stützt darüber hinaus ein die Schlitteneinrichtung sowie die Spann- und Wendeeinrichtung übergreifenden Rahmen 26.
Oberhalb des Monolithen 1 ist eine Kamera 10 als Bildaufnehmer fest in den Rahmen 26 eingelassen. Die Hauptachse der Kamera 10 ist mit der Hauptachse des Monolithen 1 übereinstimmend ausgerichtet. Darüber hinaus sind in der Figur 2 dargestellt, 2 Dosierköpfe 17 und 18, die ebenfalls fest in den Rahmen 26 eingelassen sind. Sie sind über Leitungen 24 und 25 mit einer Dosieranlage 16 verbunden und werden rechnergesteuert mit der in der Dosieranlage 16 enthaltenen Masse gespeist.

Die Dosierköpfe 17 und 18, die Leitungen 24 und 25 und die Dosieranlage 16 sind zur Verarbeitung thermoplastischer Massen beheizbar.

Diese Dosierköpfe weisen unterschiedliche Anzahlen von Düsen 22 und 23 auf. Entsprechend dem Ergebnisse der Bildverarbeitung werden die Dosierköpfe 22 und 23 von der Schlitteneinrichtung angefahren und der Monolith 1 durch die Komponente 21 an den jeweiligen Dosierkopf herangefahren, der dann in die festgelegten Kanäle 6 im Monolithen 1, z. B. die thermoplastische Masse einspritzt.

Darüber hinaus ist in der Figur 2 noch eine Dosiereinrichtung 28 dargestellt, die ebenfalls fest in den Rahmen 26 eingelassen ist. Diese enthält die keramische Füllmasse. Nachdem die erste organische Masse, z.B. Wachs, sich in den Kanälen 6 verfestigt hat, wird über diese, die gesamte Filterfläche überdeckende Dosiereinrichtung, die keramische Füllmasse auf die Oberfläche des Monolithen 1 aufgepreßt und damit in die noch offenen Kanäle bis zu einer gewünschten Tiefe eingepreßt.

Der so vorbereitete Monolith wird danach einem Temper- und Keramisierungsprozeß unterworfen, wobei die erste Masse ausbrennt und/oder ausschmilzt und die zweite Masse die Kanäle bleibend verschließt.

## Patentansprüche

1. Verfahren zum rechnergesteuerten, stirnseitigen, wechselweisen Verschließen von im Ausgangszustand durchgehenden Kanälen eines keramischen Wabenkörper-Monolithen für Abgasreinigungsanlagen von Verbrennungsmotoren, wobei die später im Betrieb freien Öffnungen, die das anströmende ungereinigte Gas bzw. das abströmende gereinigte Abgas der Kanäle führen, mit Hilfe von Dosierköpfen einer Dosiereinrichtung, zunächst temporär mit einer ersten, erhärtbaren, viskosen Masse verschlossen werden, nach deren Erhärtung, die danach noch freien Kanalöffnungen mit einer zweiten permanent-wirkenden, ebenfalls erhärtbaren, viskosen Masse verschlossen werden, und anschließend die erste Masse im Verlauf der Härtung der zweiten Masse entfernt wird, wobei
- zunächst die erste Stirnseite (19) von einem Bildaufnehmer (10) abgetastet und das abgetastete Bild in einem Speicher eines Rechners abgelegt und verarbeitet wird,
- der Rechner das Bild nach zusammenhängenden Zonen (2,3,4,5) von Kanälen (6) absucht, die mit vorgebbaren Toleranzen der Sollgeometrie einer entsprechenden Zone eines idealisierten Wabenkörper-Monolithen entsprechen, mit der Maßgabe, daß die Zonen eine möglichst hohe Anzahl von Kanälen (6) beinhalten,
- der Abarbeitungsplan der durch den Rechner angesteuerten Dosierköpfe (17,18) einer Dosiervorrichtung festgelegt wird,
- entsprechend des festgelegten Abarbeitungsplanes die Düsen (22,23) der jeweiligen Dosierköpfe (17,18) in die zu verschließenden Kanäle abgesenkt werden und eine erste ausbrennbare und/oder ausschmelzbare Verschluß-Masse in die Endbereiche der Kanäle eingebracht wird, wobei die Dosierköpfe (17,18) so motorisch verfahren und angesteuert werden, daß entsprechend der genannten Ermittlung der Zonen von Kanälen (6) der Dosierkopf mit der höchsten Anzahl von Düsen (22,23) am häufigsten zum Einsatz kommt und danach der Dosierkopf mit der nächsten niedrigeren Anzahl von Düsen verwendet wird, solange, bis alle vorgesehenen Kanäle (6) verschlossen sind,
- hiernach die Düsen (22,23) aus diesen herausbewegt werden,
- der Monolith (1) nach Verschließen der Kanäle (6) auf der ersten Stirnseite (19) um 180°C gedreht wird und in entsprechender Weise
- die Kanäle (6) auf der anderen Stirnseite (20) in einem zu jenem auf der ersten Stirnseite (19) komplementäre Muster verschlossen werden, dadurch gekennzeichnet, daß
- nach Aushärten der ersten Verschluß-Masse in den Endbereichen der Kanäle (6), anschließend eine zweite, von der ersten unterschiedliche, keramisierbare und/oder sinterbare Masse zum Verschließen der dann noch offenen Kanäle eingesetzt wird, wobei alle noch offenen Kanäle der Stirnseiten (19,20) mit einem die gesamte Filterfläche überdeckenden Dosierzylinder (28) in einem einzigen Arbeitsgang in ihren Endbereichen verschlossen werden, und
- daß der so vorbereitete Wabenkörper-Monolith (1) anschließend einem Aufheiz- und Keramisierungsprozeß unterworfen wird, wobei die erste Verschluß-Masse ausbrennt und/oder ausschmilzt.

2. Verfahren nach Anspruch 1,
**dadurch gekennzeichnet,**
daß als erste Masse eine überwiegend organische Masse bei einer Viskosität η von 10⁵ dPa·s bis 10⁶ dPa·s, insbesondere von 10^{5,5} dPa·s bis 10^{5,8} dPa·s in die Kanalöffnungen eingebracht wird.

3. Verfahren nach den Ansprüchen 1 und 2,
**dadurch gekennzeichnet**,
daß als erste Masse eine, im Vergleich zur zweiten Masse bei niedrigeren Temperturen ausbrennbare und/oder ausschmelzbare, organische Masse eingesetzt wird.

4. Verfahren nach den Ansprüchen 1 bis 3,
**dadurch gekennzeichnet,**
daß als erste Masse eine thermoplastische Masse eingesetzt wird.

5. Verfahren nach den Ansprüchen 1 bis 4,
**dadurch gekennzeichnet**
daß als erste Masse eine wachsartige Verbindung, eine Masse auf Silikonbasis, und/oder auf Kunstharzbasis, und/oder auf Basis eines Heißklebers eingesetzt wird.

6. Verfahren nach den Ansprüchen 1 bis 5,
**dadurch gekennzeichnet,**
daß als zweite Masse eine hoch-temperaturbeständige, keramisierbare und/oder sinterbare, überwiegend anorganische Masse eingebracht wird.

7. Verfahren nach den Ansprüchen 1 bis 6,
**dadurch gekennzeichnet,**
daß die zweite Masse mit einer Viskosität η von 10⁴ dPa·s bis 10⁵ dPa·s eingebracht wird.

8. Verfahren nach den Ansprüchen 1 bis 7,
**dadurch gekennzeichnet**,
daß der Ausbrand bzw. das Ausschmelzen der ersten Masse bei Temperaturen erheblich unter der Keramisierungstemperatur des Monolithen bzw. der zweiten Masse erfolgt.

9. Verfahren nach den Ansprüchen 1 bis 8,
**dadurch gekennzeichnet**,
daß der Ausbrand bzw. das Ausschmelzen der ersten Masse während des Anstiegs der Temperatur auf die Keramisierungstemperatur des Monolithen bzw. der zweiten Masse erfolgt.

## Claims

1. A process for the computer-controlled end-face alternate sealing of channels, which in the initial state are continuous, of a ceramic honeycomb monolith for exhaust gas purification systems of internal combustion engines, where the openings, which later in operation are exposed and which guide the inflowing unpurified gas and the outflowing purified exhaust gas in the channels, are first temporarily sealed with the aid of metering elements of a metering device by means of a first hardenable viscous compound, after the hardening of which the channel openings which are still exposed are sealed by a second permanently acting and also hardenable viscous compound, and then the first compound is removed during the hardening of the second compound, where
- first the first end face (19) is scanned by an image-recording means (10) and the scanned image is stored and processed in a memory of a computer,
- the computer scans over the image in accordance with cohesive zones (2, 3, 4, 5) of channels (6) which, with predeterminable tolerances of the set geometry, correspond to a corresponding zone of an idealized honeycomb monolith, with the proviso that the zones contain as high as possible a number of channels (6),
- the procedural plan of the metering elements (17, 18) of a metering apparatus which are triggered by the computer is established,
- in accordance with the established procedural plan, the nozzles (22, 23) of the respective metering elements (17, 18) are lowered into the channels to be sealed and a first sealing composition, which can be removed by burning and/or melting, is introduced into the end regions of the channels, the metering elements (17, 18) being moved in motorized manner and triggered such that in accordance with the said determining of the zones of channels (6) the metering element having the largest number of nozzles (22, 23) is used most often and thereafter the metering element having the next largest number of nozzles is used until all the channels (6) provided are sealed,
- thereafter the nozzles (22, 23) are moved out of these channels (6),
- the monolith (1) is rotated through 180°C [sic] after the channels (6) on the first end face (19) have been sealed, and in corresponding manner
- the channels (6) on the other end face (20) are sealed in a pattern complementary to that on the first end face (19),
characterized in that
- after the first sealing composition has hardened in the end regions of the channels (6), then a second ceramizable and/or sinterable composition, different from the first composition, for sealing the channels which are still open is used, all the still open channels of the end faces (19, 20) being sealed in their end regions in a single operation by means of a metering cylinder (28) which covers the entire filter surface, and
- in that the honeycomb monolith (1) prepared in this way is then subjected to a heating and ceramization process, the first sealing composition being removed by burning and/or melting.

2. A process according to Claim 1, characterized in that there is introduced into the channel openings as the first composition a predominantly organic composition at a viscosity η of 10⁵ dPa.s to 10⁶ dPa.s, in particular 10^{5.5} dPa.s to 10^{5.8} dPa.s.

3. A process according to Claims 1 and 2, characterized in that there is used as the first composition an organic composition which by comparison with the second composition can be removed by burning and/or melting at lower temperatures.

4. A process according to Claims 1 to 3, characterized in that there is used as the first composition a thermoplastic composition.

5. A process according to Claims 1 to 4, characterized in that there is used as the first composition a wax-type compound, a composition based on silicone and/or on synthetic resin and/or based on a hot-melt adhesive.

6. A process according to Claims 1 to 5, characterized in that there is introduced as the second composition a predominantly inorganic composition which resists high temperatures and is ceramizable and/or sinterable.

7. A process according to Claims 1 to 6, characterized in that the second composition is introduced at a viscosity η of 10⁴ dPa.s to 10⁵ dPa.s.

8. A process according to Claims 1 to 7, characterized in that the removal by burning or by melting of the first composition takes place at temperatures considerably below the ceramization temperature of the monolith or of the second composition.

9. A process according to Claims 1 to 8, characterized in that the removal by burning or by melting of the first composition takes place during the increase in temperature to the ceramization temperature of the monolith or of the second composition.

## Revendications

1. Procédé pour obturer en alternance, côté face frontale, sous la commande d'un ordinateur, des canaux qui, à l'origine, sont débouchants dans un corps monolithique céramique en nid d'abeille destiné à des dispositifs d'épuration des gaz d'échappement de moteurs à combustion interne, les orifices libres en fonctionnement des canaux assurant la circulation des gaz entrant non épurés ou des gaz d'échappement épurés étant obturés de manière temporaire, à l'aide de têtes doseuses faisant partie d'un dispositif de dosage, au moyen d'une première masse visqueuse durcissable, les orifices de canaux restés libres étant obturés après durcissage de la première masse au moyen d'une seconde masse visqueuse durcissable à action permanente et la première masse étant éliminée au cours du durcissage de la seconde masse, procédé selon lequel
- en premier lieu, on balaie la première face frontale (19) à l'aide d'un appareil (10) de prise de vues, on enregistre l'image obtenue dans la mémoire d'un ordinateur et on la traite,
- l'ordinateur recherche sur l'image des zones (2, 3, 4, 5) liées entre elles de canaux (6) qui, avec des tolérances préétablies, correspondent à la géométrie de consigne d'une zone correspondante d'un corps monolithique en nid d'abeille idéal, avec pour condition que les zones contiennent un nombre aussi élevé que possible de canaux (6),
- on détermine le plan de travail des têtes doseuses (17, 18) commandé par ordinateur d'un dispositif de dosage,
- on introduit les buses (22, 23) des têtes doseuses (17, 18) concernées dans les canaux à obturer conformément au plan de travail établi,et on applique une première masse d'obturation combustible et/ou fusible dans les zones terminales des canaux, les têtes doseuses (17, 18) étant déplacées par des moyens mécaniques et commandées de manière telle que, conformément aux zones de canaux (6) déterminées, la tête de doseuse comportant le plus grand nombre de buses (22,23) soit utilisée le plus souvent, puis la tête doseuse comportant le nombre de buses immédiatement inférieur, ceci jusqu'à ce que tous les canaux (6) prévus soient obturés,
- à la suite de quoi, on retire les buses (22, 23) des canaux,
- après avoir obturé les canaux (6) sur la première face frontale on tourne le corps monolithique (1) de 180° et de manière analogue
- on obture les canaux (6) sur l'autre face frontale (20) selon un dessin complémentaire de celui de la première face frontale (19),
caractérisé par le fait que
- après durcissement de la première masse d'obturation dans les zones terminales des canaux (6), on utilise une seconde masse céramisable et/ou frittable, différente de la première, pour obturer les canaux restés ouverts, tous les canaux restés ouverts des faces frontales (19, 20) étant obturés au niveau de leur zone terminale en une seule opération au moyen d'un cylindre doseur (28) qui couvre la totalité de la surface du filtre et que
- l'on soumet le corps monolithique (1) en nid d'abeille ainsi préparé à un processus de chauffage et de céramisation, la première masse d'obturation étant éliminée par combustion et/ou par fusion.

2. Procédé selon la revendication 1, caractérisé par le fait que l'on applique dans les orifices des canaux comme première masse d'obturation une masse essentiellement organique présentant une viscosité η comprise entre 10⁵ dPa.s et 10⁶ dPa.s, plus particulièrement entre 10^{5,5} dPa.s et 10^{5,8} dPa.s.

3. Procédé selon les revendications 1 et 2, caractérisé par le fait que l'on utilise comme première masse d'obturation une masse organique qui, par rapport à la seconde masse d'obturation, brûle et/ou fond à des températures plus basses.

4. Procédé selon les revendications 1 à 3, caractérisé par le fait que l'on utilise comme première masse d'obturation une masse thermoplastique.

5. Procédé selon les revendication 1 à 4, caractérisé par le fait que l'on utilise comme première masse d'obturation un composé de type cire, une masse à base de silicone et/ou à base de résine synthétique et/ou à base d'un adhésif à chaud.

6. Procédé selon les revendication 1 à 5, caractérisé par le fait que l'on utilise comme seconde masse d'obturation une masse essentiellement inorganique céramisable et/ou frittable résistante aux températures élevées.

7. Procédé selon les revendication 1 à 6, caractérisé par le fait que l'on applique la seconde masse d'obturation avec une viscosité η comprise entre 10⁴ dPa.s et 10⁵ dPa.s.

8. Procédé selon les revendication 1 à 7, caractérisé par le fait que la combustion ou la fusion de la première masse d'obturation a lieu à une température nettement inférieure à la température de céramisation du corps monolithique ou de la seconde masse d'obturation.

9. Procédé selon les revendication 1 à 8, caractérisé par le fait que la combustion ou la fusion de la première masse d'obturation a lieu lorsque la température atteint la température de céramisation du corps monolithique ou de la seconde masse d'obturation.
